# EUROPÄISCHE PATENTANMELDUNG

(11) **EP 4 083 483 A1**
(43) Veröffentlichungstag der Anmeldung: **02.11.2022**
(21) Anmeldenummer: 21171086.8
(22) Anmeldetag: 29.04.2021
(51) Int. Cl.: F16K 27/02

(54) **DRUCKREGELVENTIL**

(71) Anmelder: Georg Fischer Rohrleitungssysteme AG, 8201 Schaffhausen (CH)
(72) Erfinder: Petry, Dirk, 8245 Feuerthalen (CH); Trefz, Oliver, 79848 Bonndorf (DE); Cantoni, Flavio, 8212 Neuhausen (CH)
(74) Vertreter: Fenner, Seraina

(57) **Zusammenfassung**

Druckregelventil zum Regeln des Drucks von gasförmigen und flüssigen Medien in Rohrleitungen, vorzugsweise im Trinkwasserbereich beinhaltend ein Hauptventil mit dem die Rohrleitung verbunden ist, wobei das Hauptventil, ein Hauptventilgehäuse, einen Führungszylinder, ein Ventilelement, Kanäle zur Leitung des Mediums und ein Federelement aufweist, wobei das Ventilelement und der Führungszylinder konzentrisch zueinander angeordnet sind und das Ventilelement verschiebbar am Führungszylinder angeordnet ist, einen Steuerblock, wobei der Steuerblock Kanäle zur Zuführung des Mediums ans Hauptventil und ans Pilotventil aufweist und ein Pilotventil zur Regelung des Kontrolldrucks, wobei das Pilotventil ebenfalls Kanäle zur Führung des Mediums aufweist, wobei das Hauptventil, der Steuerblock und das Pilotventil mittels Steckverbindungen mediumsdicht untereinander verbunden sind.

## Beschreibung

Die Erfindung betrifft ein Druckregelventil zum Regeln des Drucks bzw. des Eingangs- oder Ausgangsdrucks von gasförmigen und flüssigen Medien in Rohrleitungen vorzugsweise im Trinkwasserbereich beinhaltend ein Hauptventil mit dem die Rohrleitung verbunden ist, wobei das Hauptventil, ein Hauptventilgehäuse, einen Führungszylinder, ein Ventilelement, Kanäle zur Leitung des Mediums und ein Federelement aufweist, wobei das Ventilelement und der Führungszylinder konzentrisch zueinander angeordnet sind und das Ventilelement verschiebbar am Führungszylinder angeordnet ist, einen Steuerblock, wobei der Steuerblock Kanäle zur Zuführung des Mediums ans Hauptventil und ans Pilotventil aufweist und ein Pilotventil zur Regelung des Kontrolldrucks, wobei das Pilotventil ebenfalls Kanäle zur Führung des Mediums aufweist.

Druckregelventile werden in der Trinkwasserversorgung eingesetzt um den Druck in der Versorgungsleitung konstant zu halten, dabei werden Druckreduzierventile (Druck nach dem Ventil auf einem konstant niedrigeren Druck) und Druckhalteventile (Druck vor dem Ventil auf einem konstant höheren Druck) eingesetzt. Prinzipiell wird die Funktion erzielt, indem die Strömung durch eine Blende fliesst und dabei ein Druckverlust entsteht. Der Strömungsquerschnitt und die Geometrie sind veränderlich indem ein Stellglied verschoben wird. Es gibt verschiedene Ausführungen. Bisher sind vornehmlich aus einem Gusskörper hergestellte Ventile bekannt, bei denen die Blendengeometrie ähnlich eines Sitzventils ausgeführt ist. Der Stellkörper wird mittels einer Membrane bewegt, wobei die Membrane von der einen Seite mit einem Druck beaufschlagt wird, von der anderen Seite mit einer Federkraft, es stellt sich ein Gleichgewichtszustand ein. Über die Vorspannung der Feder kann der Gleichgewichtszustand verändert werden. Das Pilotventil steuert den Druck auf die Membrane mithilfe einer weiteren Konstanten derart, dass der Druck in der Rohrleitung konstant gehalten wird. Bedingt durch die Bauart und das Herstellverfahren sind die Komponenten separate Bauteile, die über Hilfsventile (in der Regel Kugelhähne), verklebte Einschraubnippel und Verrohrungen verbunden werden. Dadurch wird die Bauform komplex, die Montage aufwendig und das Produkt fehleranfällig auf Dichtheit. Ein solches Ventil ist in der DE 10 2011 056 521 A1 offenbart.

In der WO2017/187155 ist ein Ventil offenbart, in dem das Stellglied nicht in einem Winkel zur Strömungsrichtung steht, sondern die Bewegungsrichtung des Stellglieds ist in Strömungsrichtung. Das erlaubt ein kompakteres Design und ein Verzicht auf die störungs- und verschleissanfällige Membrane. Dennoch sind die einzelnen Komponenten getrennt voneinander angeordnet und müssen aufwendig untereinander verrohrt und abgedichtet werden.

Es ist Aufgabe der Erfindung ein kompaktes Druckregelventil vorzuschlagen, welches weniger Montagezeit bedarf sowie die Dichtheit des Ventiles gewährleistet ist, bzw. es kaum die Möglichkeit besteht, dass das Ventil aufgrund Montagefehler undicht ist.

Diese Aufgabe wird erfindungsgemäss dadurch gelöst, dass das Hauptventil, der Steuerblock und das Pilotventil mittels Steckverbindungen mediumsdicht untereinander verbunden sind. Das Hauptventil, der Steuerblock und das Pilotventil sind ausschliesslich über Steckverbindungen mediumsdicht untereinander verbunden, das heisst, das erfindungsgemässe Ventil weist keine Verschraubungen auf, die abgedichtet werden müssen, damit kein Medium austritt.

Das erfindungsgemässe Druckregelventil zum Regeln des Eingangs-oder Ausgangsdrucks von gasförmigen oder flüssige Medien in Rohrleitungen beinhaltet ein Hauptventil, einen Steuerblock und ein Pilotventil. Das Hauptventil weist ein Hauptventilgehäuse, einen Führungszylinder, ein Ventilelement, Kanäle zur Leitung des Mediums und ein Federelement auf. Im Hauptventilgehäuse sind Kanäle zur Mediumsführung angeordnet. Der Führungszylinder ist an einem Grundkörper des Hauptventils angeordnet bzw. als ein Teil ausgebildet, wobei der Grundkörper mit integriertem Führungszylinder vorzugsweis über Steckverbindungen mit dem Hauptventilgehäuse verbunden. Der Führungszylinder ist hohl ausgebildet und bildet dadurch einen Teil einer Druckkammer in der das Federelement angeordnet ist. Vorzugsweise weist das Hauptventil einen Ventilöffnungsring über den das Medium einströmt und ein Dichtelement, welches zusammen mit dem Ventilelement das Ventil verschliesst, auf. Das Ventilelement ist konzentrisch am Führungszylinder angeordnet, wobei das Ventilelement verschiebbar am Führungszylinder angeordnet ist. Vorzugsweise ist das Ventilelement am Aussendurchmesser des Führungszylinders angeordnet, wobei auch eine umgekehrte Anordnung, dass das Ventilelement im hohlen Führungszylinder angeordnet ist, denkbar ist. Bei der bevorzugten Variante bei der das Ventilelement am Aussendurchmesser des Führungszylinders angeordnet ist, wie auch bei der andern Variante, ist es vorteilhaft mindestens eine Dichtung dazwischen vorzusehen, um die grössenverstellbare Druckkammer, welche durch das Ventilelement und den Führungszylinder gebildet wird, abzudichten. Diese Dichtung kann in verschiedenen Ausführungsformen hergestellt sein, idealerweise als O-Ring oder X-Ring. Je nach transportierten Medium kann zur besseren Medienverträglichkeit diese Dichtung, wie auch alle übrigen im Druckregelventil verbauten Dichtungen, aus unterschiedlichen Elastomerwerkstoffen hergestellt werden.

Das Druckregelventil weist vorzugsweise eine Wirkungsrichtung zum Öffnen und Schliessen des Ventils parallel zur Strömungsrichtung des Mediums auf. Die Einbaulage des erfindungsgemässen Druckregelventils kann in einem Winkle zwischen 0° und 90° liegen, wobei die Strömung von unten nach oben strömt. Dadurch, dass das Ventilelement eine Bewegungsrichtung parallel zur Strömungsrichtung aufweist, ist das erfindungsgemässe Druckregelventil kompakt in seiner Bauform. Die Hauptströmung des Mediums erfährt in dem erfindungsgemässen Druckregelventil keine Richtungsänderung bzw. Umlenkung. Der am Hauptventil angeordnete Steuerblock sowie das Pilotventil wird über zuführende und ableitende Kanäle im Steuerblock und im Pilotventil mit dem Hauptventil verbunden. Die zuführenden Kanäle im Steuerblock bzw. Steuerkanäle dienen dem Zuführen des Mediums zum Steuerblock und weiter vorzugsweise über Leitungsabschnitte zum Pilotventil, das heisst, mittels den Kanälen im Steuerblock werden das Hauptventil und das Pilotventil untereinander verbunden. Vorzugsweise verläuft ein Kanal vom Hauptventil zum Steuerblock, indem er sich dann teilt und sich einmal zur Druckkammer und einmal zum Pilotventil erstreckt. Im Steuerblock erfährt der Strömungsquerschnitt des Kanals eine Verjüngung, wobei die Verzweigung zur Druckkammer exakt in dieser Verjüngung angeordnet ist. Damit wird erreicht, dass eine Änderung in der Fliessgeschwindigkeit an der Stelle der Querschnittverjüngung auftritt, wenn eine Druckveränderung im Medium in der Rohrleitung auftritt. Das heisst, bei Erhöhung der Fliessgeschwindigkeit in der Querschnittsverjüngung erzeugt dies einen Sog der den Druck in der Druckkammer reduziert und umgekehrt. Das Pilotventil weist ebenso Kanäle zur Mediumsführung und Druckregulierung auf. Das Hauptventil, der Steuerblock und das Pilotventil sind mittels Steckverbindungen untereinander mediumsdicht verbunden. Das heisst, das erfindungsgemässe Druckregelventil benötigt keine Rohrleitungen die Verschraubungen aufweisen, um eine mediumsdichte Verbindung zu erzielen, die das Medium von einer Komponente bzw. Bauteil zum andern leitet. Dies hat auch den Vorteil, dass das erfindungsgemässe Druckregelventil modular zusammenbaubar ist. Da die Steckverbindungen vorzugsweise einheitlich ausgebildet sind, wie auch ihre Anordnungen identisch sind, lässt sich auf unterschiedliche Dimensionen von Hauptventilen jeweils den gleichen Steuerblock anbringen wie auch das gleiche Pilotventil, was eine wirtschaftliche Herstellung von unterschiedlichen Dimensionen des Druckregelventils ermöglicht. Zudem besteht auch die Möglichkeit, ein Druckhalteventil in ein Druckregelventil oder umgekehrt, durch Austausch des Steuerblocks und Pilotventils umzubauen, aufgrund des modularen Aufbaus und der einfachen Steckverbindungen die die Bauteile bzw. Komponenten aufweisen und dadurch untereinander kompatibel sind.

Bei der vorliegenden Erfindung sind die mediumführenden Kanäle in den einzelnen Bauteilen integriert und von aussen nicht sichtbar. Das heisst, das erfindungsgemässe Druckregelventil benötigt keine Rohrleitungen, die Verschraubungen aufweisen, um so eine mediumsdichte Leitung zu erzielen, die das Medium von einer Komponente bzw. Bauteil zum andern leitet. Zudem weist das erfindungsgemässe Druckregelventil keine sichtbaren Rohrleitungen auf, die sich nicht parallel zur Strömungsrichtung erstrecken.

Es ist vorteilhaft, wenn die mediumführenden Kanäle im Hauptventil, Steuerblock und Pilotventil über die Steckverbindungen mediumsdicht untereinander verbunden sind. Dadurch, dass die Steckverbindungen an den Aus- und Eingängen der Kanäle angeordnet sind, wird gewährleistet, dass der Übergang von einem Bauteil ins andere dicht ist. Vorzugsweise ist zur Sicherstellung der Dichtheit ein Dichtelement an der Steckverbindung angeordnet.

Als vorteilhaft hat sich gezeigt, wenn die Steckverbindungen am Hauptventil alle in einer Ebene liegen, wobei die Ebene vorzugsweise parallel zur Mittelachse, wobei die Mittelachse parallel zur Strömungsrichtung des Mediums verläuft und parallel zur vertikal zur Mittelachse verlaufenden vertikalen Achse. Dies hat den Vorteil, dass das Hauptventilgehäuse als Spritzgussteil ausgebildet sein kann, wobei auch andere Herstellverfahren wie zum Beispiel additive manufacturing etc. denkbar sind. Im Falle einer Herstellung im Spritzgiessverfahren ermöglicht eine Anordnung der Steckverbindungen in der Trennebene der Spritzgussform ein einfaches und sicheres Produktionsverfahren. Die Spritzgussform kann durch die Anordnung der Steckverbindungen in einer Ebene durch zwei Halbschalen gebildet werden, die ihre Trennstelle in der Ebene haben, bzw. dass sich die Trennebene parallel zur Mittelachse des Ventils erstreckt und die Kanäle durch die Trennebene halbiert sind. Dies ermöglicht das Ausformen des im Spritzgussverfahren hergestellten Kunststoffteils. Bei einer hohen Anzahl von Kanälen, die im Druckregelventil aufgrund der Funktion des Ventils vorzusehen sind, ist die Ebenen vorzugsweise versetzt zur Mittelachse bzw. parallel versetzt zur vertikal verlaufenden Achse, welche durch das Zentrum des Hauptventils verläuft, angeordnet, somit aus der Mitte des Hauptventils versetzt. Dies ermöglicht es vorzugsweise eine weitere Ebene am Druckreduzierventil vorzusehen, die ebenfalls versetzt zur vertikalen Achse angeordnet ist, wodurch vorzugsweise zwei Ebenen gebildet werden auf denen die Kanäle und Steckverbindungen angeordnet sind, wobei die Steckverbindungen und Kanäle, die in der zweiten Ebene liegen vorzugsweise im Steuerblock und Pilotventil angeordnet sind, so das jedes Bauteil vorzugsweise nur eine Ebene aufweist und im Falle einer Herstellung im Spritzgussverfahren das Kunststoffteil einfach entformbar ist, da die Form durch zwei Hälften gebildet wird. Selbstverständlich ist aber auch eine Ebene in der Mitte denkbar und bei nicht allzu vielen Kanälen und Steckverbindungen durchaus eine optimale Lösung. Alternative Gestaltungen der Spritzgussform sind durchaus denkbar. Es ist beispielsweise Vorteilhaft, wenn dazu die Kanäle durch Schieber bzw. eintauchende Stifte im Giesswerkzeug geformt werden, die zum Entformen des Spritzgussteils herausgezogen werden. Dadurch kann die Trennstelle des Spritzgusswerkzeugs auch anders verlaufen als durch die wie oben beschriebenen Ebene.

Zudem ist es vorteilhaft, wenn die Kanäle am Hauptventil alle in einer Ebene liegen, wobei die Ebene vorzugsweise parallel zur Mittelachse verläuft. Wobei sich als weiter bevorzugte Ausführungsform gezeigt hat, wenn die Ebene versetzt zur Achse bzw. parallel versetzt zur vertikal verlaufenden Achse, welche durch das Zentrum des Hauptventils verläuft, angeordnet ist, wobei dies wie oben erwähnt vor allem der Fall ist, wenn viel Kanäle und Steckverbindungen am Druckregelventil vorzusehen sind. Wie bereits oben erwähnt, ermöglicht das ein Ausformen des gespritzten Kunststoffteils. Auch der Grundkörper des Hauptventils weist Kanäle und Steckverbindungen auf, die ebenso in derselben Ebene liegen wie beim Hauptventilgehäuse.

Gemäss einer bevorzugten Ausführungsform sind die Steckverbindungen jeweils durch ein Einsteckelement und ein dazu passendes Aufnahmeelement im zu verbindenden Bauteil gebildet, wobei das Einsteckelement integral am Bauteil angeordnet ist bzw. mit dem Bauteil als ein Teil ausgebildet ist und dadurch aus demselben Material, vorzugsweise Kunststoff hergestellt ist. Dies hat den Vorteil, dass eine weitere Trennstelle, welche abzudichten wäre, vermieden werden kann, wie auch der Montageaufwand durch das Vermeiden von separaten Verbindungsteilen reduziert wird. Das Einsteckteil ist somit direkt an dem Bauteil angeformt, sei es das Hauptventil, der Steuerblock, das Pilotventil, der Grundkörper oder auch an den vorzugsweise dazwischen angeordneten Pilotventil- und Steuerblockadaptern. Alle ineinander steckbaren Bauteile des erfindungsgemässen Ventils sind vorzugsweise aus Kunststoff hergestellt. Es ist zudem vorteilhaft, wenn alle die ineinander steckbaren Bauteile im Spritzgussverfahren hergestellt sind.

Alternativ wird die Steckverbindung jeweils durch ein Einsteckelement und zwei sich gegenüberliegende Aufnahmeelemente gebildet, wobei das Einsteckelement als separates Bauteil ausgebildet ist. Vorzugseise ist das Einsteckelement als Doppelnippel ausgebildet, wobei sich dann an beiden zu verbindenden Bauteilen ein Aufnahmeelement befindet und der Doppelnippel als Verbindungselement dient.

Es ist vorteilhaft, wenn das Druckregelventil keine Verschraubungen zur mediumsdichten Verbindung der Kanäle anwendet. Das erfindungsgemässe Druckregelventil weist zudem keine umgelenkten Rohrleitungen auf, die zur Mediumsführung zwischen den Bauteilen die einzelnen Bauteile des Druckregelventils untereinander verbindet. Es ist vorteilhaft, falls sichtbare Leitungen am Druckregelventil angeordnet sind, dass diese ausschliesslich in einer Ebene verlaufen, vorzugsweise parallel zur Strömungsrichtung.

Als vorteilhaft hat sich gezeigt, wenn beim erfindungsgemässen Druckregelventil die Bauteile bzw. Komponenten mittels Befestigungsmitteln zueinander fixiert sind. Vorzugsweise werden die Bauteile bzw. Komponenten, wie Hauptventil, Steuerblock, Pilotventil, Steuerblockadapter, Pilotventiladapter miteinander fixiert, wobei die Befestigungsmittel in einem nicht dichtenden Bereich zwischen den Komponenten angeordnet sind. Als Befestigungsmittel werden vorzugsweise Schrauben verwenden, wobei diese selbst schneidende Gewinde aufweisen können wie auch solche Schrauben, die mit einem bereits bestehenden Innengewinde im Gegenstück verschraubt werden. Selbstverständlich sind auch Schnellspannverbindungen oder andere Befestigungsmittel denkbar um die Komponenten zueinander zu fixieren.

Vorzugsweise ist die Mediumsführung zwischen Pilot- und Hauptventil und/oder Steuerblock und Hauptventil nicht von aussen erkennbar bzw. die Kanäle verlaufen ausschliesslich in den Gehäusen, was das Risiko einer Beschädigung oder Manipulation reduziert. Bis auf die mediumsführende Verbindung zwischen Pilotventil und Steuerblock sind alle Kanäle in den Gehäusen der Bauteile, welche vorzugsweise im Spritzgussverfahren hergestellt sind, dementsprechend ins Bauteil integriert. Es ist vorteilhaft, wenn die mediumsführende Verbindung zwischen Steuerblock und Pilotventil mittels eines Leitungsabschnitts gebildet wird, wobei der Leitungsabschnitt ebenfalls durch Einstecken mit dem Steuerblock und dem Pilotventil verbunden ist.

Das erfindungsgemässe Druckregelventil weist vorzugsweise einen Steuerblockadapter und/oder einen Pilotventiladapter auf. Dies hat den Vorteil, dass die Kanäle auch in diesen Bauteilen integriert sind und die Kanäle in einer weiteren Ebene verlaufen um die Druckregelung in Bezug auf den vorherrschenden Druck am Ein- oder Ausgang sicherzustellen bzw. mit Hilfe der Adapter die Kanäle in den unterschiedlichen Ebenen bzw. den zwei Ebenen miteinander verbunden werden. Selbstverständlich wäre es auch möglich alle Kanäle im Druckregelventil auf derselben Ebene anzuordnen dies ist abhängig davon wie viele Kanäle es bedarf, um die gewünschte Funktion des Ventils zu erreichen, weshalb die Adapter optional sind und ein Steuerblock wie auch ein Pilotventil direkt am Hauptventil angeordnet sein kann. Das heisst also, je mehr Kanäle das Ventil zur Regelung benötigt desto eher müssen die Kanäle auf unterschiedlichen Ebenen angeordnet sein um sich nicht zu kreuzen und damit das Bauteil, falls es als Spritzgussteil ausgebildet ist, entformen zu können.
Eine vorteilhafte Ausführungsform liegt darin, dass die Steckverbindungen zwischen dem Steuerblockadapter und dem Hauptventil und zwischen dem Pilotventiladapter und dem Hauptventil alle parallel in die gleiche Richtung ausgerichtet sind. Dies hat den Vorteil einer einfachen Montage, die vorzugsweise ohne hohen Aufwand automatisiert werden kann da alles in dieselbe Richtung montiert wird und teure Roboter mit schwenkbaren Armen zur Montage nicht benötigt werden. Ebenso ist es Vorteilhaft, wenn die Steckverbindungen zwischen den Adaptern und dem Pilotventil wie auch dem Steuerblock ebenfalls in dieselbe Richtung, parallel zueinander ausgereichte sind.

Als weitere vorteilhafte Ausführungsform hat sich gezeigt, wenn jeweils in einem Adapter mindestens zwei Kanäle angeordnet sind. Selbstverständlich können auch noch mehr Kanäle in den Adaptern verlaufen oder sogar die separat ausgebildeten Adapter für den Steuerblock und das Pilotventil kann als ein Adapter ausgebildet sein. Durch die Vereinigung von möglichst vielen Kanälen in den Adaptern wird wiederum der Montageaufwand reduziert. Je mehr Kanäle in einem Adapter desto weniger Bauteile bzw. Komponente müssen zusammengefügt werden.

Das erfindungsgemässe Druckregelventil ist als Druckreduzierventil und Druckhalteventil verwendbar, wobei die Funktion des Druckregelventils durch das Auswechseln des Steuerblocks und des Pilotventils wechselbar ist. Das heisst auch, dass die entsprechende Funktion eines Druckreduzierventils oder eines Druckhalteventils durch den Steuerblock und das Pilotventil definiert ist. Werden diese nun ausgewechselt, was durch den modularen Aufbau problemlos möglich ist, wird die Funktion entsprechend geändert.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein erfindungsgemässes Druckregelventil, wobei die Schnittansicht durch die Ebene verläuft in der die Steckverbindungen liegen,
- Fig. 2: einen Querschnitt A-A durch das erfindungsgemässe Druckregelventil,
- Fig. 3: eine dreidimensionale Ansicht des erfindungsgemässen Druckregelventils und
- Fig. 4: einen Ausschnitt alternativen Ausführungsform einer Steckverbindung, wobei das Einsteckteil als separates Teil ausgebildet ist.

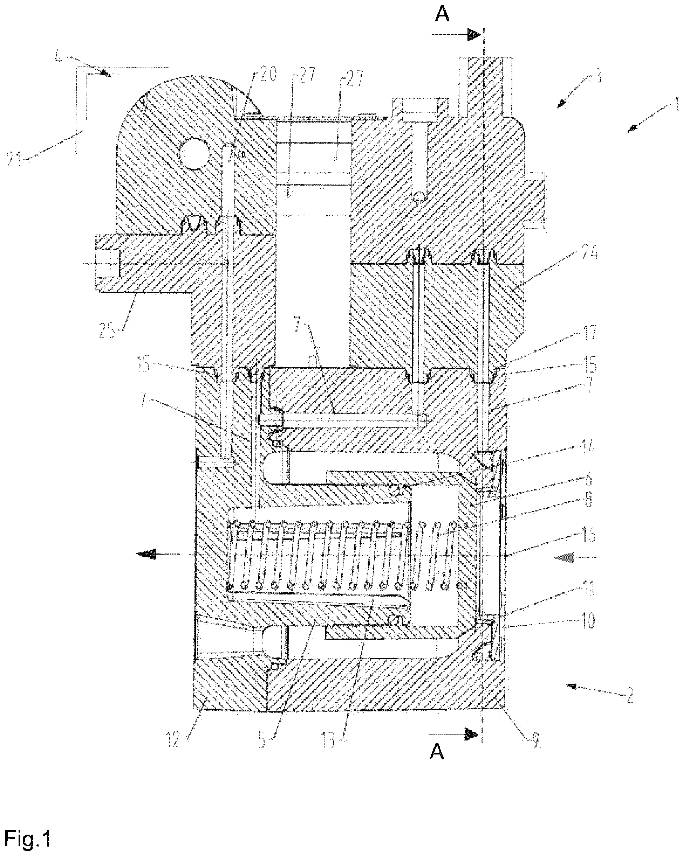

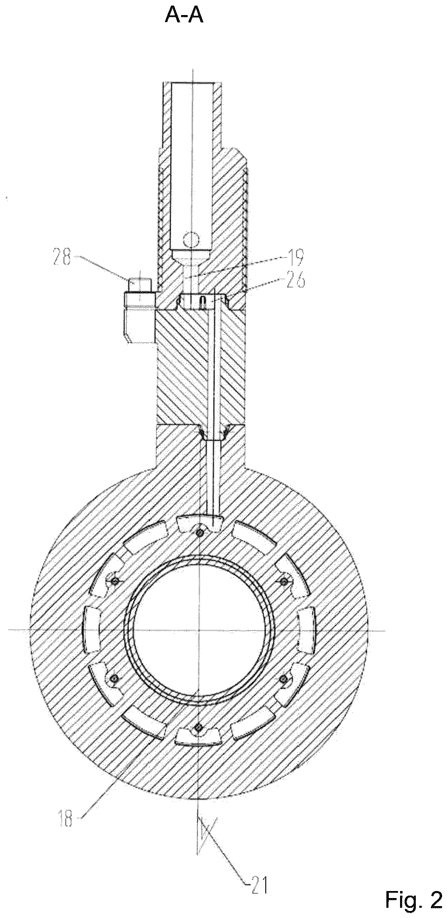

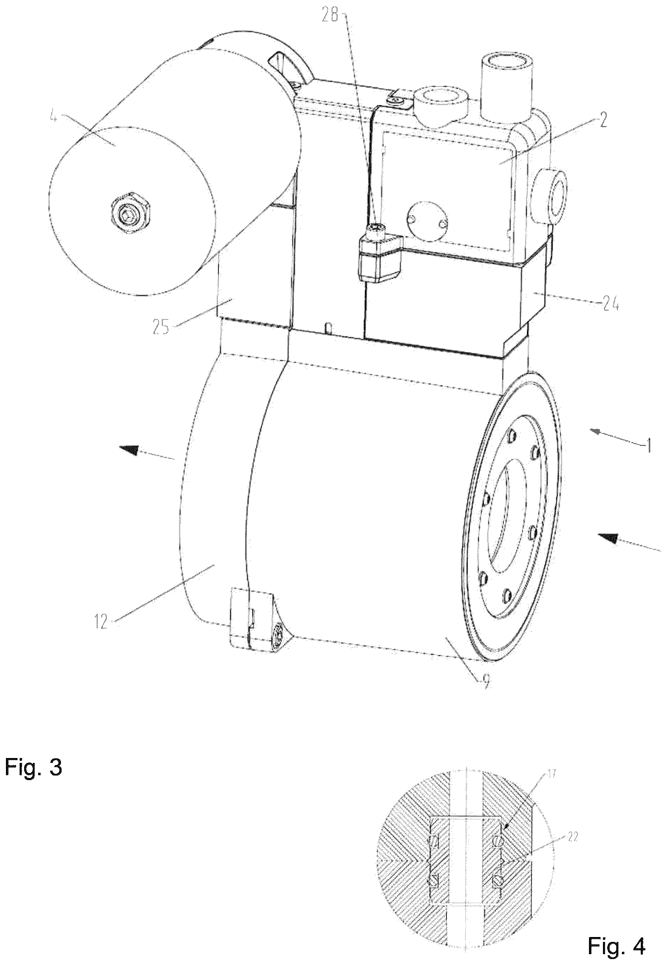

Die in Fig. 1 dargestellte Zeichnung zeigt das erfindungsgemässe Druckregelventil 1 in einer Schnittansicht, wobei der Schnitt durch die Ebene 21 gelegt ist in der die Steckverbindungen 17 und Kanäle 7 des Hauptventils 2 angeordnet sind. Das Druckregelventil 1 dient dem Regeln von durchströmenden Medien vorzugsweise Trinkwasser. Das Druckregelventil 1 weist ein Hauptventil 2 auf, wobei das Hauptventil 2 einen Führungszylinder 5, ein Ventilelement 6, Kanäle 7 zur Leitung des Mediums und ein Federelement 8 aufweist. Das Ventilelement 6 ist vorzugsweise am Aussendurchmesser des Führungszylinders 5 angeordnet, wobei auch eine umgekehrte Anordnung denkbar ist. Das Ventilelement 6 und der hohle Führungszylinder 5 bilden eine Druckkammer 13, die die Position des Ventilelements regelt und so den Eingangsdruck oder Ausgangsdruck kontrolliert, abhängig davon ob das erfindungsgemässe Druckregelventil 1 als Druckreduzierventil oder Druckhalteventil ausgebildet ist. Zur Abdichtung der Druckkammer 13 ist zwischen dem Ventilelement 6 und dem Führungszylinder 5 eine Dichtung 14 angeordnet. Zudem befindet sich ein Federelement 8 in der Druckkammer 13 um eine konstante Vorspannung auf das Ventilelement 6 auszuüben. Der Führungszylinder 5 ist am Grundkörper 12 angeordnet bzw. als ein Teil ausgebildet. Das Hauptventil 2 weist ein Hauptventilgehäuse 9 auf, welches die Kanäle 7 zur Führung des Mediums und Regelung des Ventils 1 aufweist. Das Medium strömt über den Ventilöffnungsring 10 in das Druckregelventil 1 ein und zugleich wird das Medium über die Kanäle 7 in den Steuerblock 3 und das Pilotventil 4 geleitet um den zulässigen Ein- oder Ausgangdruck mit Hilfe der Druckkammer 13 zu regulieren. Das Medium wird also am Eingang des Ventils 1 über die Kanäle 7 im Hauptventil 2 weiter in den Steuerblock 2 in die dortigen Kanäle 19 und in die Kanäle 20 im Pilotventil 3 geleitet sowie auch in die Druckkammer 13 des Hauptventils 2. Aus der Fig. 1 ist gut ersichtlich, dass das Hauptventil 2, der Steuerblock 3 und das Pilotventil 4 untereinander mittels Steckverbindungen 17 mediumsdicht verbunden sind. Es ist vorteilhaft wenn die Steckverbindungen 17 an den Enden der Kanäle 7, 19, 20, welche auch in der Fig. 2 ersichtlich sind, angeordnet sind, wodurch die Verbindungen der Bauteile untereinander über die Kanäle7, 19, 20 erfolgt und diese gleichzeitig aufgrund der Steckverbindungen 17, welche ein Einsteckelement 22 und ein passendes Aufnahmeelement 23 aufweisen, als abgedichteter Übergang ausgebildet sind. Vorzugsweise weist die Steckverbindung 17 zudem noch ein Dichtelement 15 auf.
Zudem ist aus der Fig. 1 gut zu erkennen, dass die Steckverbindungen 17 im Hauptventil 2 alle in einer Ebene 21 liegen, durch die auch der Schnitt verläuft. Fig. 2 zeigt den Schnittverlauf A-A. Die hier dargestellte Ausführungsform weist eine Ebene 21 auf, in der die Steckverbindungen 17 und auch die Kanäle 7 im Hauptventil 2 liegen, die versetzt zur vertikalen Achse 18, welche durch das Zentrum des Hauptventils 1 verläuft. Selbstverständlich wäre auch eine Ebene durch das Zentrum denkbar. Die Ebene 21 bzw. dass alle Steckverbindungen 17 und Kanäle 7 in einer Ebene 21 liegen, ermöglicht ein Ausformen, wenn das Hauptventil 2 bzw. das Hauptventilgehäuse 9 im Spritzgussverfahren hergestellt wird. Ebenfalls ist der Grundkörper 12 mit einer Steckverbindung 17 mit dem Hauptventilgehäuse 9 mediumsdicht verbunden und die Kanäle 7 und Steckverbindungen 17 liegen in derselben Ebene. Selbstverständlich kann das Hauptventilgehäuse 9 auch im Spritzgussverfahren hergestellt werden, wenn eine andere Formteilung der Spritzgussform erfolgt. Dazu werden die Kanäle 7 durch Schieber am Formwerkzeug gebildet die zum Ausformen des Spritzgussteils herausgenommen werden können.Es ist vorteilhaft, wenn das Einsteckelement 22 einteilig mit dem Bauteil ausgebildet ist an dem es angeordnet ist. Dadurch können zusätzliche Einzelteile vermieden werden, wie auch Trennstellen, die wieder abgedichtet werden müssten. Jedoch ist eine alternative Ausführung durchaus denkbar, bei dem die Steckverbindung 17 durch ein separates Einsteckelement 22 gebildet ist und in zwei sich gegenüberliegenden Aufnahmeelementen 23 eingebracht ist, was aus Fig. 4 erkennbar ist. Es ist vorteilhaft wenn die Bauteile wie Hauptventilgehäuse 9, Grundkörper 12, Steuerblock 3, Pilotventil 4 bzw. das Gehäuse des Pilotventils, Steuerblockadapter 24 und auch der Pilotventiladapter 24 aus Kunststoff hergestellt sind wie auch im Spritzgussverfahren. Die Steckverbindungen 17 sind einheitlich ausgebildet, wodurch das Druckregelventil 1 einen modularen Aufbau ermöglicht. Dadurch kann z.B. das Hauptventil 2 durch eine andere Baugrösse ersetzt werden und der Steuerblock 3 und das Pilotventil 4 können bestehen bleiben. Dies ermöglich auch eine wirtschaftliche Herstellung des Ventils 1 in unterschiedlichen Dimensionen wie es auch möglich ist durch das blosse Wechseln des Steuerblocks 3 und des Pilotventils 4 die Funktion des Druckregelventils zu ändern, nämlich kann ein Druckreduzierventil einfach in ein Druckhalteventil oder umgekehrt umgebaut werden. Zudem ist es vorteilhaft, wenn die Steckverbindungen 17 zwischen dem Steuerblockadapter 24 und dem Hauptventil 2 und zwischen dem Pilotventiladapter 25 und dem Hauptventil 2 parallel in die gleiche Richtung ausgerichtet sind. Dadurch der Montageprozess zwischen den Bauteilen mit geringem Aufwand automatisiert werden.

Das erfindungsgemässe Druckregelventil 1 weist vorzugsweise einen Steuerblockadapter 24 und/oder einen Pilotventiladapter 25 auf. In Fig. 2 ist gut ersichtlich, dass das Druckregelventil 1 mehrere Ebenen haben kann, aufgrund der hohen Anzahl an Kanälen die sich nicht tangieren dürfen. Selbstverständlich kann aber das Druckregelventil 1 auch alle Kanäle in derselben Ebene haben, wenn das der Platz und die Ausgestaltung zulässt, so kann ev. auch auf die Adapter 24, 25 verzichtet werden und der Startblock 3 und das Pilotventil 4 direkt mit dem Hauptventil 2 verbunden werden (nicht dargestellt). Es ist erkennbar, dass die Kanäle 7 im Hauptventil 2 auf der einen Seite der Achse 18 bzw. in der Ebene 21 verlaufen und ebenfalls noch in den Adaptern 24, 25 und wechseln dann die Ebene somit verlaufen die Kanäle 19, 20 im Steuerblock 3 und im Pilotventil 4 auf der anderen Seite der Achse 18. In Fig. 2 ist gut ersichtlich wie der Ebenenwechsel gelöst ist. Es wird ein Einsteckelement 22 gezeigt, das eine längliche Form hat sowie das entsprechende Aufnahmeelement 23, das auch eine längliche Form hat. Dadurch stellen sie einen Kanalverbinder 26 her, der den einen Kanal 7 auf der einen Ebene 21 mit dem andern Kanal 19 auf der anderen parallel verlaufenden Ebenen mediumsdicht verbindet.
Die Verbindung zwischen Steuerblock 3 und Pilotventil 4 wird vorzugsweise durch Leitungsabschnitte 27 gebildet, die sich ebenfalls durch blosses Einstecken in die Bauteile mediumsdicht verbinden und eine Mediumsführung zwischen Pilotventil 4 und Steuerblock sicherstellen.

Fig. 3 zeigt eine dreidimensionale Darstellung des erfindungsgemässen Druckregelventil 1. Gut ersichtlich ist die kompakte Ausführung und dass keine Leitungen vom Ventil 1 bzw. den einzelnen Komponenten herausragen und mit einem anderen Komponenten verbindet wie auch keine Verschraubungen zur Mediumsführung zwischen den Komponenten vorhanden sind. Es sind lediglich Befestigungsmittel 28 an den Komponenten bzw. Bauteilen angebracht, damit sie zusammenhalten bzw. gegenseitig fixiert sind.

### Bezugszeichenliste

- 1: Druckregelventil
- 2: Hauptventil
- 3: Steuerblock
- 4: Pilotventil
- 5: Führungszylinder
- 6: Ventilelement
- 7: Kanäle im Hauptventil
- 8: Federelement
- 9: Hauptventilgehäuse
- 10: Ventilöffnungsring
- 11: Dichtelement
- 12: Grundkörper
- 13: Druckkammer
- 14: Dichtung
- 15: Dichtelement
- 16: Mittelachse
- 17: Steckverbindung
- 18: Vertikale Achse
- 19: Kanäle im Steuerblock
- 20: Kanäle im Pilotventil
- 21: Ebene
- 22: Einsteckelement
- 23: Aufnahmeelement
- 24: Steuerblockadapter
- 25: Pilotventiladapter
- 26: Kanalverbinder
- 27: Leitungsabschnitt
- 28: Befestigungsmittel

## Patentansprüche

1. Druckregelventil (1) zum Regeln des Drucks von gasförmigen und flüssigen Medien in Rohrleitungen, vorzugsweise im Trinkwasserbereich beinhaltend ein Hauptventil (2) mit dem die Rohrleitung verbunden ist, wobei das Hauptventil (2), ein Hauptventilgehäuse, einen Führungszylinder (5), ein Ventilelement (6), Kanäle (7) zur Leitung des Mediums und ein Federelement (8) aufweist, wobei das Ventilelement (6) und der Führungszylinder (5) konzentrisch zueinander angeordnet sind und das Ventilelement (6) verschiebbar am Führungszylinder (5) angeordnet ist, einen Steuerblock (3), wobei der Steuerblock (3) Kanäle (19) zur Zuführung des Mediums ans Hauptventil (2) und ans Pilotventil (4) aufweist und ein Pilotventil (4) zur Regelung des Kontrolldrucks, wobei das Pilotventil (4) ebenfalls Kanäle (20) zur Führung des Mediums aufweist, **dadurch gekennzeichnet, dass** das Hauptventil (2), der Steuerblock (3) und das Pilotventil (4) mittels Steckverbindungen (17) mediumsdicht untereinander verbunden sind.

2. Druckregelventil (1) nach Anspruch 1, **dadurch gekennzeichnet, dass** die mediumführenden Kanäle (7, 19, 20) im Hauptventil (2), im Steuerblock (3) und im Pilotventil (4) über die Steckverbindungen (17) mediumsdicht untereinander verbunden sind.

3. Druckregelventil (1) nach einem der Ansprüche 1 oder 2, **dadurch gekennzeichnet, dass** das Druckregelventil (1) eine Wirkungsrichtung zum Öffnen und Schliessen des Ventils parallel zur Strömungsrichtung des Mediums aufweist.

4. Druckregelventil (1) nach einem der Ansprüche 1 bis 3, **dadurch gekennzeichnet, dass** die Steckverbindungen (17) am Hauptventil (2) alle in einer Ebene (21) liegen, wobei sich die Ebene (21) vorzugsweise parallel zur Mittelachse (16) und parallel zur vertikalen Achse (18) erstreckt.

5. Druckregelventil (1) nach einem der Ansprüche 1 bis 4, **dadurch gekennzeichnet, dass** die Kanäle (7) am Hauptventil (2) alle in einer Ebene (21) liegen, wobei sich die Ebene (21) vorzugsweise parallel zu Mittelachse (16) und parallel zur vertikalen Achse (18) erstreckt.

6. Druckregelventil (1) nach einem der Ansprüche 1 bis 5, **dadurch gekennzeichnet, dass** die Ebene (21) parallel versetzt zur vertikalverlaufenden Achse (18) angeordnet ist bzw. nicht durch die Mitte des zylindrisch ausgebildeten Hauptventils (2) verläuft.

7. Druckregelventil (1) nach einem der Ansprüche 1 bis 6, **dadurch gekennzeichnet, dass** die Steckverbindungen (17) jeweils durch ein Einsteckelement (22) und ein Aufnahmeelement (23) gebildet sind, wobei das Einsteckelement (22) integral am zu verbindenden Bauteil (2, 3, 4, 24, 25) angeordnet ist bzw. mit dem Bauteil als ein Teil ausgebildet ist und aus demselben Werkstoff besteht.

8. Druckregelventil (1) nach einem der Ansprüche 1 bis 6, **dadurch gekennzeichnet, dass** die Steckverbindungen (17) jeweils durch ein Einsteckelement (22) und zwei Aufnahmeelemente (23) gebildet werden, wobei das Einsteckelement (22) als separates Bauteil ausgebildet ist.

9. Druckregelventil (1) nach einem der vorangehenden Ansprüche, **dadurch gekennzeichnet, dass** das Druckregelventil (1) keine Verschraubungen zur mediumsdichten Verbindung der Kanäle (7, 19, 20) aufweist.

10. Druckregelventil (1) nach einem der vorangehenden Ansprüche, **dadurch gekennzeichnet, dass** die Bauteile bzw. Komponenten mittels Befestigungsmitteln (28) zueinander fixiert sind.

11. Druckregelventil (1) nach einem der vorangehenden Ansprüche, **dadurch gekennzeichnet, dass** das die Mediumsführung zwischen Pilot- und Hauptventil (2, 4) und/oder Steuerblock (3) und Hauptventil (2) nicht von aussen erkennbar ist bzw. die Kanäle (7, 19, 20) ausschliesslich in den Gehäusen verlaufen.

12. Druckregelventil (1) nach einem der vorangehenden Ansprüche, **dadurch gekennzeichnet, dass** das Druckregelventil (1) einen Steuerblockadapter (24) und/oder einen Pilotventiladapter (25) aufweist.

13. Druckregelventil (1) nach einem der vorangehenden Ansprüche, **dadurch gekennzeichnet, dass** die Steckverbindungen (17) zwischen dem Steuerblockadapter (24) und dem Hauptventil (2) und zwischen dem Pilotventiladapter (25) und dem Hauptventil (2) parallel in die gleiche Richtung ausgerichtet sind.

14. Druckregelventil (1) nach einem der vorangehenden Ansprüche, **dadurch gekennzeichnet, dass** jeweils in einem Adapter (24, 25) mindestens zwei Kanäle (19, 20) angeordnet sind.

15. Verwendung eines Druckregelventils (1) nach einem der Ansprüche 1 bis 14, **dadurch gekennzeichnet, dass** das Druckregelventil (1) als Druckreduzierventil und Druckhalteventil verwendbar ist, wobei die Funktion des Druckregelventils (1) durch das Auswechseln des Steuerblocks und des Pilotventils wechselbar ist.
